**Europäisches Patentamt**

**European Patent Office**

**Office européen des brevets**

(19)

(11) Veröffentlichungsnummer : **0 208 937**
**B1**

(12)

# EUROPÄISCHE PATENTSCHRIFT

(45) Veröffentlichungstag der Patentschrift :
07.09.88

(21) Anmeldenummer : **86108274.1**

(22) Anmeldetag : **18.06.86**

(51) Int. Cl.⁴ : **B 60 T 17/08**

(54) **Vorrichtung zur Be- und Entlüftung eines eine Rückholfeder aufnehmenden Sekundärraumes eines Bremszylinders einer Spreizkeilbremse.**

(30) Priorität : **13.07.85 DE 3525082**

(43) Veröffentlichungstag der Anmeldung :
**21.01.87 Patentblatt 87/04**

(45) Bekanntmachung des Hinweises auf die Patenterteilung : **07.09.88 Patentblatt 88/36**

(84) Benannte Vertragsstaaten :
**BE DE FR GB IT NL**

(56) Entgegenhaltungen :
**EP-A- 0 087 335**
**DE-U- 7 407 936**
**FR-A- 2 276 507**
**FR-A- 2 409 177**
**GB-A- 2 067 666**
**US-A- 3 508 470**

(73) Patentinhaber : **ROBERT BOSCH GMBH**
**Postfach 50**
**D-7000 Stuttgart 1 (DE)**

(72) Erfinder : **Beck, Siegfried**
**Stöfflerweg 8**
**D-7000 Stuttgart 80 (DE)**

## Beschreibung

### Stand der Technik

Die Erfindung geht aus von einem Bremszylinder nach der Gattung des Hauptanspruchs. Ein derartiger Bremszylinder für allgemeine Anwendung ist bekannt (DE-B-2 430 394).

Bei dieser bekannten Bauart ist eine den Sekundärraum umgebende Ringkammer vorgesehen, die über Löcher an der Oberseite des Bremszylinder-Gehäuses mit dem Sekundärraum verbunden ist. An der Unterseite der Ringkammer befindet sich ein Schlauchstutzen, in dem eine Labyrinth-Dichtuns vorgesehen ist. Auf diese Weise ist zwar der Sekundärraum spritzwassersicher abgeschirmt, aber ein Eindringen von Feuchtigkeit ist nicht mit Sicherheit vermieden.

Der Sekundärraum eines Bremszylinders ist großer Korrosionsgefahr ausgesetzt, da sich an der Unterseite des Sekundärraumes die Entlüftungs- und Entwässerunssöffnung befindet. Bei einem Druckausgleich wird über diese Entlüftungsöffnung Luft angesaugt, die Feuchtikeit oder sogar Schmutz, im Winter Salz oder Salznebel in das Innere des Sekundärraumes trägt.

Desweiteren ist durch die Unterlagen des DE-GM 7 407 936 eine Spreizkeilbremse bekannt, bei der die Atemluft des Bremszylinder-Sekundärraumes durch den Spreizkeilmechanismus hindurchgeführt wird.

Dabei sind aber der den Sekundärraum begrenzende Kolben und der von dessen Kolbenstange betätigte Spreizkeilmechanismus starker Korrosion ausgesetzt, insbesondere, wenn Salznebel oder andere aggressive Chemikalien in den Sekundärraum und in den Spreizkeilmechanismus gelangen.

Bei neueren Spreizkeilkonstruktionen ist der Mechanismus zu den Bremsbacken hin hermetisch abgeschlossen. Eine Be- und Entlüftung durch den Spreizkeilmechanismus hindurch ist deshalb gar nicht mehr möglich.

### Vorteile der Erfindung

Die eingangs genannte Vorrichtung mit den kennzeichnenden Merkmalen des Hauptanspruchs hat dem Stand der Technik gegenüber den Vorteil, daß so gut wie keine Feuchtigkeit und Salznebel oder dgl. in den Sekundärraum des Bremszylinders und schon gar nicht in den Spreizkeilmechanismus gelangen können. Dies ist besonders wichtig, weil die Druckflächen eines Spreizkeilmechanismus sehr hoch belastet sind und deshalb zwar gehärtet, nicht aber oberflächengeschützt (z. B. verchromt) sind. Sie können deshalb sehr leicht oxidieren, was zu einem Hängenbleiben des Mechanismus und damit zu einem Ausfall der Bremse führen kann. Eine solche Gefahr besteht auch dadurch, daß die Rückholfeder aus Platzgründen nur verhältnismäßig schwach ausgebildet sein kann (25 kp). Desweiteren ist es von Vorteil, daß der Sekundärraum mit einer Kammer verbunden wird, die ohnehin nach außen weitgehend geschützt ist.

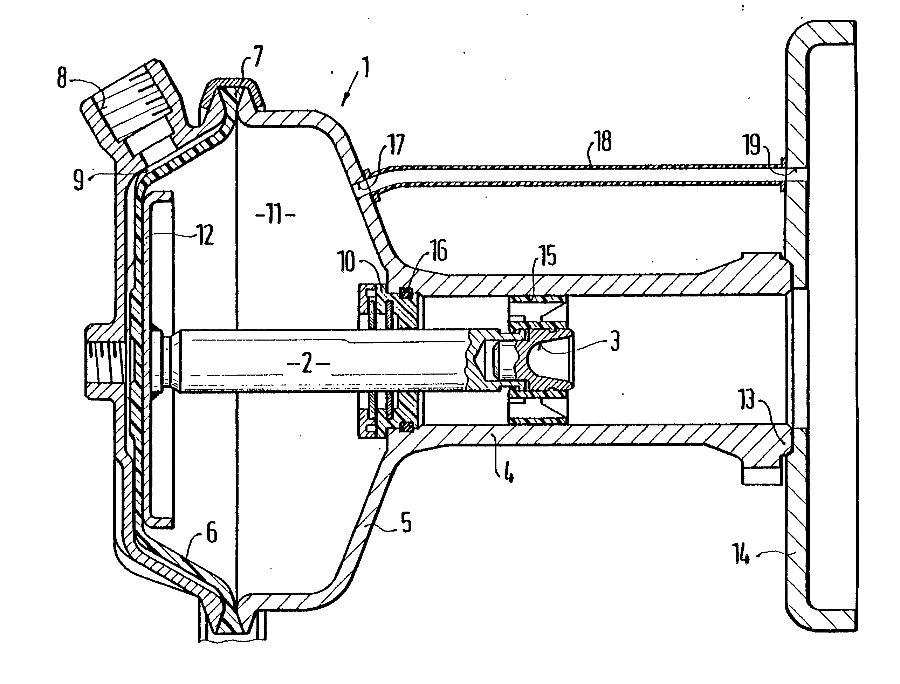

Weitere vorteilhafte Ausgestaltungen der Erfindung ergeben sich aus der Beschreibung und der Zeichnung.

### Zeichnung

Ein Ausführungsbeispiel der Erfindung ist in der Zeichnung dargestellt und in der nachfolgenden Beschreibung näher erläutert.

### Beschreibung des Ausführungsbeispieles

Ein Bremszylinder 1 ist zur Betätigung einer Keilspreizbremse bestimmt. Er hat zu diesem Zweck eine Kolbenstange 2, die an ihrem freien Ende mit einer Kalotte 3 zur Aufnahme einer nicht dargestellten Keilspreizeinrichtung vorgesehen ist. Die Kolbenstange 2 wird von einem Führungsrohr 4 aufgenommen, das an ein Gehäuse 5 des Bremszylinders 1 angeformt ist. Das Bremszylinder-Gehäuse 5 besteht aus zwei Teilen, zwischen denen eine Membran 6 an ihrem Rand 7 eingespannt ist. Die Membran 6 ist das Arbeitsglied des Bremszylinders, sie trennt eine mit einem Leitungsanschluß 8 versehene Arbeitskammer 9 von einem Sekundärraum 11. Die Kolbenstange 2 liegt an ihrem inneren Ende mit einem an sie angeschweißten Teller 12 an der Membran 6 an.

Das freie Ende der Kolbenstange 2 trägt einen Kunststoffring 15, der in das Führungsrohr 4 gleitbar eingesetzt ist. Am Übergang vom Führungsrohr 4 zum Bremszylinder-Gehäuse 5 ist eine Dichtungsanordnung 10 mittels einer O-Ringdichtung 16 abgedichtet eingesetzt, die die Kolbenstange 2 führunggebend aufnimmt.

Das freie Ende des Führungsrohres 4 ist mit einem Flansch 13 versehen, mit dem der Bremszylinder 1 an einem Bremsschild 14 einer nicht näher dargestellten Radbremse befestigt ist, die über einen Spreizkeilmechanismus betätigbar ist.

Der den Sekundärraum 11 umgebende Teil des Bremszylinders 1 hat einen Wanddurchbruch 17, von dem eine Verbindungs-Rohrleitung 18 zu einem Durchbruch 19 im Bremsschild 14 geführt ist. Auf diese Weise ist der Sekundärraum 11 mit dem Freiraum hinter dem Bremsschild 14 verbunden, der an Außenluft angeschlossen ist.

Bei der Betätigung der Bremse strömt Druckluft in die Arbeitskammer 9 ein und drückt die Membran 6 mit ihrer Kolbenstange 2 schnell nach rechts. Die Luft im Sekundarraum 11 wird durch die Verbindungs-Rohrleitung 18 hindurch zum Freiraum hinter dem Bremsschild 14 geführt und an der Ausmündung bei 19 stoßartig ausgeblasen. Ein insbesondere bei der ersten Bremsung an der Ausmündung eventuell vorhandener Schmutz wird dabei nach außen weggeschleudert. Beim Lösen der Bremse geht die Membran 6 nur langsam in ihre Ausgangsstellung zurück, so daß Luft auch nur langsam durch die Verbindungs-Rohrleitung angesaugt wird. Damit ist das Eindringen von Schmutz oder dergleichen beim Saugvorgang verhindert. Es ist also festzuhalten, daß beim Atmen des Sekundärraumes 11 keine Feuchtigkeit und kein Schmutz in den Bremszylinder 1 eindringen können. Dies gilt umsomehr für den Spreizkeilmechanismus, der von der Atemluft des Sekundärraumes völlig unberührt bleibt. Dies ist ein besonderer Vorteil der Erfindung. Außerdem ist es wichtig, daß es in dem Sekundärraum 11 weder Über- noch Unterdruck gibt. Das ist vorteilhaft, weil die Rückholfeder für den Spreizkeilmechanismus wegen der Einbaugegebenheiten nicht stärker als 25 kp gemacht werden kann.

**Patentanspruch**

Vorrichtung zur Be- und Entlüftung eines eine Rückholfeder aufnehmenden Sekundärraumes (11) eines Bremszylinders (1) einer Keilspreizbremse mit einem von einer Kolbenstange (2) durchdrungenen, vom Bremszylinder (1) zu einem Bremsschild (14) führenden Rohransatz (4) und mit einem, mit dem Sekundärraum (11) verbundenen, zusätzlichen, hinter dem Bremsschild (14) liegenden und an Außenluft angeschlossenen Freiraum, dadurch gekennzeichnet, daß der Spreizkeilmechanismus zu dem Freiraum hinter dem Bremsschild (14) hin abgedichtet ist, daß ferner an den Sekundärraum (11) eine Verbindungs-Rohrleitung (18) angeschlossen ist und daß diese Verbindungs-Rohrleitung (18) neben dem Rohransatz (4) verläuft und vom Sekundärraum (11) zum Freiraum hinter dem Bremsschild (14) geführt ist.

**Claim**

Device for the ventilation of a secondary space (11), receiving a return spring, of a brake cylinder (1) of a wedge-type brake having a tube piece (4), passed through by a piston rod (2) and leading from the brake cylinder (1) to a brake backing plate (14) and having an additional free space, joined to the secondary space (11), lying behind the brake backing plate (14) and connected to outside air, characterized in that the wedge mechanism is sealed off from the free space behind the brake backing plate (14), in that furthermore a connecting pipe line (18) is connected to the secondary space (11) and in that this connecting pipe line (18) runs alongside the tube piece (4) and is led from the secondary space (11) to the free space behind the brake backing plate (14).

**Revendication**

Dispositif d'aération et de désaération d'un espace secondaire (11) contenant un ressort de rappel d'un cylindre de frein (1) du type à écartement à coin, avec un appendice tubulaire (4) qui est traversé par une tige de piston (2), conduisant du cylindre de frein (1) à un flasque de frein (14) et avec un espace libre supplémentaire, qui est relié à l'espace secondaire (11), situé derrière le flasque de frein (14) et raccordé à l'air extérieur, caractérisé en ce que le mécanisme du type à écartement à coin est étanché vers l'espace libre, derrière le flasque de frein (14), qu'en outre une tuyauterie de liaison (18) est raccordée à l'espace secondaire (11) et que cette tuyauterie de liaison (18) se développe à côté de l'appendice tubulaire (4) et est guidée depuis l'espace secondaire (11), vers l'espace libre, derrière le flasque de frein (14).